# EUROPÄISCHE PATENTANMELDUNG

(11) **EP 1 073 248 A1**
(43) Veröffentlichungstag der Anmeldung: **31.01.2001**
(21) Anmeldenummer: 00111631.8
(22) Anmeldetag: 31.05.2000
(51) Int. Cl.: H04M 3/428, H04M 9/00, H04M 3/42, H04M 1/274

(54) **Telekommunikations-Endgerät mit einer Vielzahl von Leitungen und Anzeigeeinrichtung zum Anzeigen von Anrufer-Informationen und Anruf-Status**

(30) Priorität: 11.06.1999 DE 19926660
(71) Anmelder: Tenovis GmbH & Co. KG, 60326 Frankfurt (DE)
(72) Erfinder: Groschke, Dirk-Olaf, 40237 Düsseldorf (DE); Soyke, Holger, 41179 Mönchengladbach (DE); Braun, Heinz-Mathias, 41539 Dormagen (DE); Loch, Wolfgang, 47506 Neunkirchen-Vluyn (DE)

(57) **Zusammenfassung**

Bei einem Telekommunikations-Endgerät, das an eine Vielzahl von Leitungen gleichzeitig anschließbar ist und eingerichtet ist, jeweils ein Gespräch auf einer ersten der Leitungen zu führen und gleichzeitig auf einer zweiten Leitung eintreffende Anrufe in einem Wartezustand zu halten, mit einer Anzeigevorrichtung (22) zum Darstellen von Informationen über einen während eines gegenwärtigen geführten Gesprächs auf einer zweiten Leitung eintreffenden Anruf ist ein Bedienelement (24) vorgesehen, das es einem Benutzer gestattet, unter mehreren eingetroffenen Anrufen einen auszuwählen, dessen Informationen auf der Anzeigeeinrichtung (22) angezeigt werden sollen.

## Beschreibung

Die vorliegende Erfindung betrifft ein Telekommunikations-Endgerät, das an eine Vielzahl von Leitungen gleichzeitig anschließbar ist und eingerichtet ist, jeweils einen Anruf auf einer ersten der Leitungen zu führen und gleichzeitig auf einer zweiten Leitung eintreffende weitere Anrufe in einem Wartezustand zu halten. Derartige Endgeräte, bei denen sich die eintreffenden weiteren Anrufe durch einen in ein laufendes Gespräch eingespeistes Tonsignal, auch als Anklopfsignal bezeichnet, oder durch ein von dem Endgerät abgegebenes optisches Signal bemerkbar machen, sind allgemein bekannt. Insbesondere bei ISDN-Endgeräten besteht die Möglichkeit, als optisches Signal zum Bekanntgeben eines eintreffenden Anrufs die Rufnummer und, falls bekannt, den Namen eines Anrufers auf einer alphanumerischen Anzeigeeinrichtung des Endgeräts anzuzeigen, um einem Benutzer anhand dieser Information die Entscheidung zu erleichtern, ob er den Anruf sofort beantworten, abweisen oder in einem Wartezustand halten will.

Wenn im Laufe eines Gesprächs zwei oder mehr weitere Anrufe eintreffen, wird die Verwaltung der im Wartezustand gehaltenen Anrufe durch einen Benutzer beschwerlich.

### Vorteile der Erfindung

Durch die vorliegende Erfindung werden ein Telekommunikations-Endgerät beziehungsweise ein Verfahren zum Betreiben eines Telekommunikations-Endgeräts geschaffen, die eine bequeme und effiziente Verwaltung von mehreren im Laufe eines Gesprächs eintreffenden weiteren Anrufen ermöglichen.

Dieser Vorteil wird erreicht, indem dem Benutzer eines Telekommunikations-Endgeräts, insbesondere eines Endgeräts der eingangs definierten Art, die Möglichkeit gegeben wird, während eines zu einem gegebenen Zeitpunkt laufenden Gesprächs unter mehreren eintreffenden aber noch nicht aktiven Anrufen einen auszuwählen, dessen Informationen auf einer Anzeigeeinrichtung angezeigt werden sollen. Herkömmliche Endgeräte geben dem Benutzer diese Wahlmöglichkeit nicht; sie zeigen mit dem Eintreffen eines Anrufs grundsätzlich die zu diesem Anruf gehörende Information an, eine Auswahlmöglichkeit besteht hier nicht.

Vorteilhaft ist, wenn die zu einem eintreffenden weiteren Anruf dargestellte Informationen auch eine Angabe über die Leitung umfassen, auf die der Anruf eintrifft. Diese Leitung kann sowohl physikalischer als auch logischer Natur sein, das heißt sie kann eine körperlich existierende Übertragungsleitung aus einer Mehrzahl von Übertragungsleitungen sein, oder es kann sich um einen von mehreren gemultiplexten Kanälen auf einer einzelnen physikalisch vorhandenen Übertragungsleitung handeln. Diese verschiedenen Leitungen sind aus der Ferne über unterschiedliche Rufnummern anwählbar. Wenn zu jedem eintreffenden Anruf eine Angabe über die Leitung, auf der er eintrifft, dem Benutzer angezeigt wird, hat dieser die Möglichkeit, aus der gewählten Nummer Rückschlüsse über den Anruf er zu ziehen - sei es, weil bestimmte Rufnummern nur bestimmten potentiellen Anrufern oder nur für bestimmte Zwecke mitgeteilt werden - und die Entscheidung, ob er den eintreffenden Anruf bevorzugt beantwortet, abweist oder warten läßt, anhand dieser Angabe zu treffen.

Um einem Benutzer eines Endgeräts die Übersicht über den Belegungszustand seines Geräts zu erleichtern, ist ferner vorzugsweise vorgesehen, daß die Anzeigeeinrichtung für jede der Vielzahl von Leitungen den Status der Leitung anzeigt, das heißt, ob die Leitung frei ist, ob sich ein Anruf im Wartezustand darauf befindet oder ob das gegenwärtig geführte Gespräch über diese Leitung läuft.

Als Anzeigeeinrichtung für ein solches Endgerät ist ein alphanumerischer Bildschirm bevorzugt, wobei das Bedienelement zum Auswählen eines Anrufs, dessen Informationen angezeigt werden sollen, eine Taste ist, die in örtlicher Beziehung zu derjenigen Region des Bildschirms steht, an der ein Symbol der Leitung darstellbar ist, auf der der Anruf eintrifft.

Dabei ist zweckmäßigerweise die Darstellung des Symbols der Leitung auf der Anzeigeeinrichtung entsprechend dem Status der Leitung variabel.

Weitere Merkmale und Vorteile der Erfindung ergeben sich aus der nachfolgenden Beschreibung eines Ausführungsbeispiels mit Bezug auf die Figuren.

### Figuren

Es zeigen
- Figur 1: einen Teil eines Telekommunikationssystems mit erfindungsgemäßen Endgeräten;
- Figur 2: eine Ansicht einer Anzeigeeinrichtung eines erfindungsgemäßen Endgeräts im Laufe eines Gesprächs, während keine weiteren Anrufe an dem Endgerät anliegen; und
- Figur 3: eine Ansicht der Anzeigeeinrichtung mit zwei während eines Gesprächs anliegenden weiteren Anrufen.

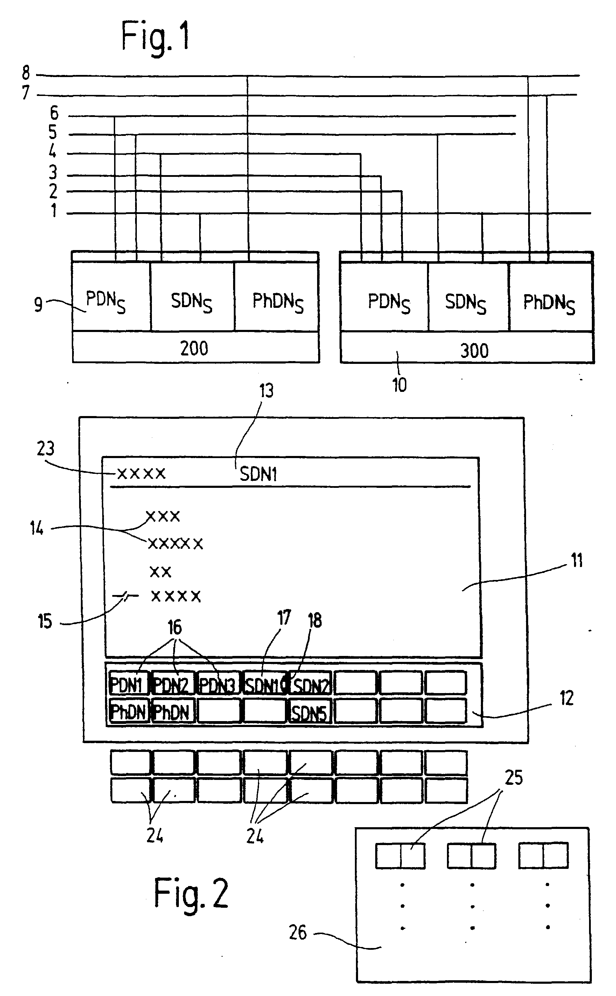

Figur 1 zeigt stark schematisiert einen Ausschnitt aus einem Telekommunikationsnetz mit zwei ISDN-Endgeräten 9,10, und einer Mehrzahl von Leitungen 1 bis 8. Jeder der Leitungen 1 bis 8 ist eine eigene Rufnummer zugeordnet, über die an die Leitung angeschlossene Endgeräte von einem weiteren Endgerät, zum Beispiel über das öffentliche Fernmeldenetz, anrufbar sind. Diese Rufnummern werden als Directory Numbers (DN) bezeichnet. Durch eine individuelle Konfiguration werden den einzelnen Endgeräten 9 beziehungsweise 10 bestimmte Rufnummern aus dem Satz der DNs fest zugeordnet. Diese Nummern bezeichnet man auch als Primary Directory Numbers (PDNs). So sind bei dem Beispiel der Figur 1 dem Endgerät 9 als PDNs die Rufnummern der Leitungen 5,6 und dem Engerät 10 die Rufnummern der Leitungen 2,3,4 zugeordnet. Des weiteren kann ein Endgerät auch die Nummern anderer an das System angeschlossener Endgeräte als sogenannte Secondary Directory Numbers (SDN) nutzen. Diese Nummern sind zwar an sich einem anderen Endgerät fest zugeordnet, was bedeutet, daß ein eintreffender Anruf normalerweise für dasjenige Endgerät bestimmt sein wird, für das die gerufene Nummer PDN ist, daß der Anruf aber auch von anderen Endgeräten entgegengenommen werden kann, für die die gerufene Nummer SDN ist. Im Beispiel der Figur 1 ist die Nummer der Leitung 5 PDN des Endgeräts 9 und SDN des Endgeräts 10. Ein auf der Leitung 5 eintreffender Anruf ist also vermutlich für das Endgerät 9 bestimmt, er kann aber auch von einem Mitarbeiter am Endgerät 10 entgegengenommen und beantwortet werden. Die Leitung 1 ist SDN für beide Endgeräte 9,10 und PDN eines weiteren, in der Figur nicht dargestellten Endgeräts.

Eine dritte Kategorie von Rufnummern sind die sogenannten Phantom Directory Numbers (PhDNs). Diese sind nicht nur einzelnen Benutzern zugeordnet, sondern sämtlichen Endgeräten der Telekommunikationsanlage. Auf diesen Leitungen eintreffende Anrufe können also von allen Endgeräten aus angenommen und bearbeitet werden.

Das Endgerät 10 hat also drei eigene Leitungen als PDNs (2,3,4), die Leitung 5 des Endgeräts 9 als erste SDN und die dem nicht gezeigten Endgerät zugeordnete Leitung 1 als zweite SDN. Zusätzlich sind noch die Leitungen 7,8 als PhDNs vorhanden. Das Endgerät verfügt also über sieben Leitungen, auf denen es beliebig kommende und gehende Gespräche führen kann.

Figur 2 zeigt eine Ansicht einer Anzeigeeinrichtung des Endgeräts 10, während auf diesem Endgerät ein Gespräch geführt wird. Die Anzeigeeinrichtung umfaßt zwei Felder, ein Gesprächs-Menüfeld 11 und ein System-Statusfeld 12. Das Gesprächs-Menüfeld 11 liefert im in Figur 2 dargestellten Zustand in seiner oberen Zeile 23 Informationen über ein gerade geführtes Gespräch. Zu den angezeigten Informationen gehört eine Angabe 13 über die Leitung, hier die Leitung SDN1, auf der das gegenwärtige Gespräch stattfindet sowie Rufnummer und, sofern er übertragen worden ist, der Name des Gesprächspartners. Letztere Informationen sind in der Figur als Buchstaben 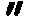 x" angedeutet.

Im unteren Teil des Menüfelds 11 wird eine Liste von Befehlen 14 angezeigt, in der Figur lediglich als Ketten von Buchstaben 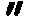 x" symbolisiert, die das Endgerät in Verbindung mit dem laufenden Gespräch ausführen kann. Mit Hilfe von in der Figur nicht dargestellten Pfeiltasten ist eine Markierung über die verschiedenen Menüeinträge der Liste verschiebbar, um einen davon, zum Beispiel den durch das Unterbrechungssymbol 15 hervorgehobenen Befehl 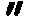 Gespräch beenden" auszuwählen und dann durch Drücken einer (nicht gezeigten) Eingabetaste auszuführen. Diese Funktion ist besonders bei Endgeräten mit Freisprechfunktion zweckmäßig.

Im System-Statusfeld 12 ist eine Mehrzahl von Kästchen 16 dargestellt, wobei jeder Leitung, an die das Endgerät angeschlossen ist, ein Kästchen 16 zugeordnet ist, das mit der Bezeichnung der Leitung beschriftet ist. Als Bezeichnung der Leitungen können, wie hier dargestellt, der Typ der Leitung, also PDN, SDN oder PhDN, in Verbindung mit einer Nummer verwendet werden, es ist aber auch denkbar, direkt die Rufnummern oder Durchwahlnummern der einzelnen Leitungen oder eine vom Benutzer frei wählbare Bezeichnung anzuzeigen.

In dem Kästchen 17, das der SDN1, also im Falle des Endgeräts 10 der Leitung 5 aus Figur 1, zugeordnet ist, ist ein Telefonhörersymbol 18 angezeigt, das angibt, daß die entsprechende Leitung durch ein Gespräch belegt ist. Es ist das Gespräch, das der Benutzer des Endgeräts gerade führt, wie auch der Angabe 13 zu entnehmen ist. Weitere Telefonhörersymbole oder eine andere Art von Markierung würden in anderen Kästchen 16 erscheinen, wenn ein anderes an die Anlage angeschlossenes Endgerät auf der dem Kästchen zugeordneten Leitung ein Gespräch führt.

Um einen Anruf einzuleiten, muß ein Benutzer durch Tippen einer einem Kästchen 16 auf der Anzeigeeinrichtung zugeordneten Taste 24 eine Leitung auswählen, auf der gerade kein Gespräch stattfindet. Diese Tasten 24 sind zum Beispiel in der Anordnung der Kästchen 16 entsprechender Anordnung unterhalb des Statusfensters 12 an einem Gehäuse des Endgeräts angeordnet.

Für die gleiche Funktion wie die Kästchen 16 und die zugeordneten Tasten 24 können auch Tasten 25 mit integrierter Anzeigefunktion eingesetzt werden. Die Anzeigefunktion kann zum Beispiel durch eine LED auf oder an der Taste realisiert sein, die in Abhängigkeit von einem anzuzeigenden Zustand an- oder ausgeschaltet ist oder blinkt, es kann sich auch um eine Taste mit integrierter LCD-Anzeige oder dergleichen handeln. Diese Tasten 25 können am Endgerät 10 selber vorgesehen sein, oder, wie in der Figur gezeigt, an einem davon getrennten Zusatzmodul 26. Sie können, wie hier gezeigt, in Kombination mit den Tasten 24 und Kästchen 16 oder auch anstelle von diesen eingesetzt werden. Letztere Möglichkeit hat den Vorteil, daß das System-Statusfeld 12 entfallen kann, so daß das Endgerät 10 mit einer kleineren Anzeigeeinrichtung auskommt oder mehr Information darauf angezeigt werden kann. Die Variante, bei der die Tasten 25 in dem separaten Modul 26 angeordnet sind, eignet sich darüber hinaus besonders zur Nachrüstung, um ein herkömmliches Telekommunikations-Endgerät in ein erfindungsgemäßes umzuwandeln.

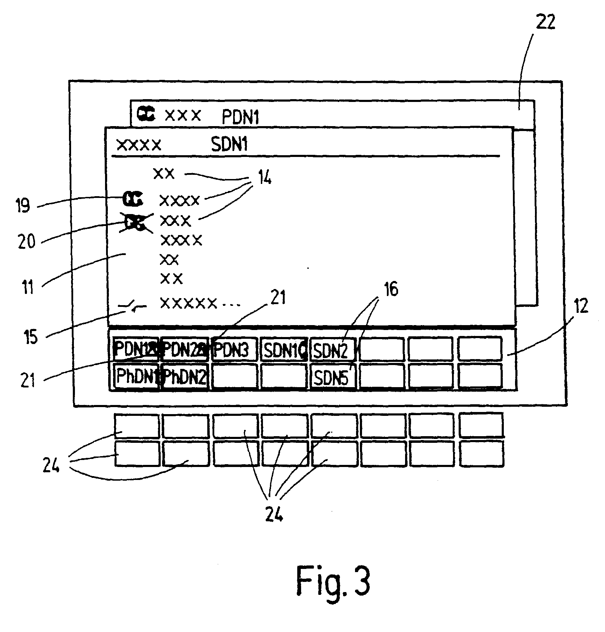

Figur 3 zeigt das Erscheinungsbild der Anzeigeeinrichtung in dem Fall, daß im Laufe eines Gesprächs zwei Anrufe auf verschiedenen Leitungen eintreffen. In der obersten Zeile 23 des Gesprächs-Menüfeldes 11 ist der Anschluß, hier SDN1, über den das Gespräch stattfindet, sowie Telefonnummer und gegebenenfalls Name des Gesprächspartners eingegeben. Sobald ein Anruf im Laufe eines Gesprächs eintrifft, wird das Gesprächs-Menüfeld 11 um zwei Befehle ergänzt, einen Befehl 19, gekennzeichnet durch ein doppeltes Telefonhörersymbol, zum Verbinden mit dem neuen Anrufer sowie ein Befehl 20 zum Ablehnen des Anrufs. Solange sich ein Anruf im Wartezustand befindet, wird gleichzeitig im zugehörigen Kästchen 16 des System-Statusfeldes 12 ein Glockensymbol 21 dargestellt, um anzuzeigen, daß sich ein wartender Anruf auf der Leitung befindet. Mit dem Eintreffen des Anrufs wird ferner ein zweites Gesprächsfenster 22 erzeugt, von dem nur eine obere Zeile sichtbar ist, die wie die obere Zeile 23 des Gesprächsnennfensters 11 die Angabe der Leitung, an der der Anruf anliegt, die Rufnummer des Gesprächspartners und eventuell dessen Namen anzeigt.

Wenn der Benutzer im offenen Gesprächs-Menüfenster 11 den Befehl Verbinden 19 oder Trennen 15 aufruft, wird das laufende Gespräch in einen Wartezustand versetzt beziehungsweise beendet und der auf der Leitung PDN1 wartende Anruf wird zum aktiven Gespräch.

Durch Tippen der Tasten 24 zu den jeweils die Glockensymbole 21 aufweisenden Kästchen 16 kann ein Benutzer die Leitung und die zugehörigen Informationen auswählen, die in dem zweiten Gesprächsfenster 22 angezeigt werden. Es ist immer das Gespräch, zu dem diese Informationen gehören, das beim Trennen der aktiven Gesprächsverbindung mit dem Befehl 15 oder dem Annehmen eines Anrufs mit dem Befehl 19 zum aktiven Gespräch wird.

Der Benutzer des Endgerätes hat so die Möglichkeit, während eines Gesprächs oder danach auch unter einer Mehrzahl von zwischenzeitlich eingetroffenen Anrufen denjenigen auszuwählen, den er zuerst entgegennehmen möchte und sich, um gegebenenfalls die Entscheidung zu treffen, welcher Anruf entgegengenommen wird, die zu dem Anruf gehörenden Informationen zuvor anzeigen zu lassen.

## Patentansprüche

1. Telekommunikations-Endgerät (9,10), das an eine Vielzahl von Leitungen (1 bis 8) gleichzeitig anschließbar ist und eingerichtet ist, um jeweils ein Gespräch auf einer ersten der Leitungen (4) zu führen und gleichzeitig auf einer zweiten Leitung (5,6) eintreffende Anrufe in einem Wartezustand zu halten, mit einer Anzeigeeinrichtung (12,12,22) zum Darstellen von Informationen über einen während eines gegenwärtig geführten Gesprächs auf einer zweiten Leitung (5,6) eintreffenden Anruf, **gekennzeichnet durch** ein Bedienelement (24), das es einem Benutzer gestattet, unter mehreren eingetroffenen Anrufen einen auszuwählen, dessen Informationen auf der Anzeigevorrichtung (11,12,22) angezeigt werden sollen, ohne dabei das Gespräch abzubrechen.

2. Telekommunikationsgerät nach Anspruch 1, **dadurch gekennzeichnet,** daß die dargestellten Informationen eine Angabe (13) über die Leitung umfassen, auf der der Anruf eintrifft.

3. Telekommunikationsgerät nach Anspruch 2, **dadurch gekennzeichnet,** daß die dargestellten Informationen Angaben über den Anrufer umfassen.

4. Telekommunikations-Endgerät nach einem der vorhergehenden Ansprüche, **dadurch gekennzeichnet,** daß die Anzeigeeinrichtung (11,12,22,25) für jede der Vielzahl von Leitungen (1 bis 8) den Status der Leitung - frei, Wartezustand oder laufendes Gespräch - anzeigt.

5. Telekommunikationsgerät nach einem der vorhergehenden Ansprüche, **dadurch gekennzeichnet,** daß die Anzeigeeinrichtung ein Bildschirm ist, der eine Region umfaßt, in der ein Symbol der Leitung (16) darstellbar ist und das Bedienelement (24) eine Taste ist, die in örtlicher Beziehung zu der Region des Bildschirms steht.

6. Telekommunikations-Endgerät nach einem der Ansprüche 1 bis 4, **dadurch gekennzeichnet,** daß die Anzeigeeinrichtung Tasten (25) mit integrierter Anzeigefunktion umfaßt.

7. Telekommunikations-Endgerät nach Anspruch 6, **dadurch gekennzeichnet,** daß die Tasten (25) an einem eigenständigen Zusatzmodul (26) angeordnet sind.

8. Telekommunikations-Endgerät nach Anspruch 3 und Anspruch 4, **dadurch gekennzeichnet,** daß die Darstellung des Symbols der Leitung auf der Anzeigeeinrichtung entsprechend des Status der Leitung variabel ist.

9. Verfahren zum Betreiben eines Telekommunikations-Endgeräts, bei dem ein während eines gegenwärtig geführten Gesprächs an dem Endgerät (9,10) eintreffender Anruf in einem Wartezustand gehalten und Informationen über den Anruf auf einer Anzeigeeinrichtung (11,12,22) dargestellt werden, **dadurch gekennzeichnet,** daß im Falle mehrerer gleichzeitig im Wartezustand befindlicher Anrufe eine Auswahl eines der Anrufe durch einen Benutzer abgefragt wird und die Informationen über den ausgewählten Anruf angezeigt werden, ohne dabei das Gespräch abzubrechen.

10. Verfahren nach Anspruch 9, **dadurch gekennzeichnet,** daß die dargestellten Informationen eine Angabe über eine Leitung umfassen, auf der der Anruf eintrifft.

11. Verfahren nach Anspruch 9 oder 10, **dadurch gekennzeichnet,** daß für jede an das Endgerät (9,10) angeschlossene Leitung ein Symbol (16) auf der Anzeigeeinrichtung (12) dargestellt wird, und daß die Darstellung des Symbols (16) der Leitung entsprechend dem Status der Leitung variiert wird.
